# EUROPEAN PATENT SPECIFICATION

(11) **EP 1 646 287 B1**
(45) Date of publication and mention of the grant of the patent: **10.01.2007**
(21) Application number: 04774832.2
(22) Date of filing: 22.07.2004
(51) Int. Cl.: A21D 13/04, A21D 2/36, A23L 1/164, A23L 1/00, A23L 1/0522

(54) **PROCESSING OF TEFF FLOUR**
VERARBEITUNG VON TEFF-MEHL
TRAITEMENT DE FARINE TEFF

(30) Priority: 22.07.2003 NL 1023977
(43) Date of publication of application: 19.04.2006
(73) Proprietor: Health & Performance Food International B.V., 9407 TG Assen (NL)
(72) Inventor: ROOSJEN, Jans, NL-9414 AB Hooghalen (NL)
(74) Representative: Winckels, Johannes Hubertus F.
(86) International application number: PCT/NL2004/000524
(87) International publication number: WO 2005/025319

(56) References cited:
- US-A- 6 139 884
- "Celiac Recipes from 1996" -, [Online] 1996, pages 1-46, XP002276229 Retrieved from the Internet: URL:http://www.enabling.org/ia/celiac/rec/ rec96-1.html> [retrieved on 2004-04-06]
- MARIE DONADIO: "Teff Cookies" -, [Online] 2002, pages 1-2, XP002276230 Retrieved from the Internet: URL:http://www.gnc.com/health_notes/Recipe /Teff_Cookies.htm> [retrieved on 2004-04-06]
- DONNA: "Yogurt Pancakes (teff or buckwheat)" -, [Online] 20 August 1998 (1998-08-20), page 1, XP002276231 Retrieved from the Internet: URL:http://countrylife.net/pages/recipes/6 47.html> [retrieved on 2004-04-06]
- BONNIE HAIR: "Teff Muffins" -, [Online] 18 November 1995 (1995-11-18), pages 1-2, XP002276232 Retrieved from the Internet: URL:http://maelstrom.stjohns.edu/CGI/wa.ex e?A2=ind9511&L=celiac&P=R8102> [retrieved on 2004-04-06]
- ADAMU ZEGEYE: "Acceptability of Injera with stewed chicken" FOOD QUALITY AND PREFERENCE, vol. 8, no. 4, 1997, pages 293-295, XP002276233

## Description

The invention relates to flour of *Eragrostis tef* and to products comprising this flour. The invention particularly relates to flour of *Eragrostis* which can well be processed into *inter alia* gluten-free food products and to methods for preparing these food products.

It has already been known for tens of years that gluten (or similar compounds such as hordeins in barley and secalins in rye) in the food, often coming from flour of wheat, barley, rye, oat and spelt, is not suitable for a large number of people, *inter alia* for babies in the first months of their lives. Many people develop hypersensitivity, which results in patients with a gluten intolerance, or celiac disease.

Celiac disease and dermatitis herpetiformis (celiac disease of the skin) are caused by a hypersensitivity to gluten. When a celiac disease patient eats or drinks something which has been prepared from or with one or more gluten-containing types of grain or has been in contact therewith, the mucous membrane of the small intestine is affected. A healthy small intestine has a large number of intestinal villi on the inside which together form an enormous surface for food intake. The intestinal villi of celiac disease patients cannot tolerate gluten - or rather, gliadins and glutenins, the building blocks of gluten. As a result of an immune response initiated by gluten, the intestinal villi are affected. Consequently, not all required nutrients can be taken in by the body. This may cause a deficit of *inter alia* vitamins, calcium and iron.

In the Netherlands, there are an estimated 75,000 celiac disease patients. Celiac disease can be discovered in people of all ages, but two peaks can be distinguished. The first peak is between the sixth and tenth year, the second between the twentieth and fortieth year. Possibly, the second group already has celiac disease from childhood, but the symptoms do not show more clearly (recognizable) until later.

There is no medicine for gluten intolerance. The only way for a celiac disease patient to prevent or treat symptoms is following a strict diet in which there are no (products of) gluten-containing grains or other crops. This is the gluten-free diet. The diet is sometimes supplemented for some time with iron tablets and extra vitamins and minerals.

There is wheat starch or wheat flour which has been made gluten-free. This can officially be called gluten-free, but is not 100 percent free of gluten. The content of gluten needs to meet the standard of the Codex Alimentarius. For (wheat) flour made gluten-free, this is 200 parts per million (ppm). However, for some celiac disease patients this is still too much: they have symptoms after eating the flour made gluten-free. Therefore, these people had better opt for the use of products which are naturally gluten-free. For naturally gluten-free products, the set standard is maximally 20 ppm. However, naturally gluten-free products can be contaminated with gluten from other sources during the processing.

Rice, corn, tapioca, soy, buckwheat, arrowroot, potatoes and chestnuts are known crops which yield gluten-free flour, with which a variety of gluten-free food products can be prepared. Another source for a gluten-free flour is *Eragrostis tef* (also called Teff). This crop has been cultivated for human consumption in mainly Ethiopia and Eritrea for more than 5000 years. In addition, Teff is used more and more often for hay in countries such as South Africa and the United States. Teff flour is traditionally used for preparing injera, a spongelike, gray pancake with a somewhat sourish taste. Injera is usually made from a flour mixture consisting of equal parts of Teff flour and wheat flour diluted with water and yeast. The diluted flour mixture is usually fermented for three to four days before it is baked.
XP 002276233 discloses the preparation of injera from Teff grains.

Teff grain is in principle suitable to be cultivated on a large scale in large parts of the world. The crop does not make high demands on the nutrient medium and the climate. It is particularly well resistant to drought.

Compared to other grains, such as wheat, barley and sorghum, Teff has a higher nutritional value. The high nutritional value of Teff is largely due to the fact that the proportion of germ and brans is large compared to the rest of the seed (endosperm). Another reason is that, due to the small size of the seed, the flour is mainly made from the whole kernel, so that no parts are lost (National Research Council, Lost crops in Africa, vol. 1, Grains, 1996). The nutritional value of 100 grams of Teff flour is approx 10 grams of protein, 2.5 grams of fat, 70 grams of carbohydrates and 5 grams of dietary fiber. The caloric value of 100 grams of Teff flour is about 1400-1500 kJ.

In summary, *Eragrostis* offers an attractive source of (gluten-free) flour. However, it has been found that the preparation of a food product with traditional Teff flour (for instance Teff flour which is mixed with wheat flour for preparing injera) often causes problems. A known problem is the instability of the product, particularly of baked products. In other cases, the product has an unattractive taste and/or structure.

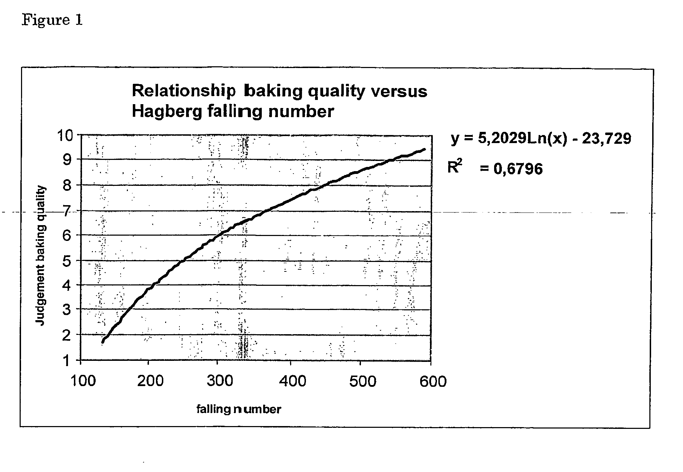

The invention provides the insight that the above-mentioned problems surprisingly do not occur if Teff flour with a particular falling number is used. The invention provides flour with a grain belonging to the genus *Eragrostis,* characterized in that the flour comprises grain whose falling number at the moment of grinding is at least 250, preferably at least 300, more preferably at least 340, most preferably at least 380. A great advantage of flour with such a falling number resides in the fact that it can, virtually without any problems, be processed into a stable, gluten-free product with an attractive taste and structure. Fig. 1 shows the correlation between the falling number of Teff flour and the baking quality of a dough prepared from Teff flour. Different Teff varieties have been tested in different after-ripening stages and under different cultivation conditions (such as climate, soil type, fertilization) on test and cultivation fie lds. Samples hereof have been collected and analyzed for *inter alia* falling number and baking quality (with test breads prepared according to the formulation and method of Example 1). This shows that a falling number of at least 250 is needed to obtain a baking product with an acceptable quality, that is, a product that is awarded at least a grade 5 (on a scale of 1-10) by a test panel. A falling number of 300 results in a significantly improved product (assessment: 6), while a product of Teff flour with a falling number of 380-390 is, on average, awarded the grade 7. It can be gathered from Fig. 1 that, for a product which meets the 'market standard' of 7.5, the use of Teff flour with a falling number of at least 400 is required.

The finding that, for obtaining a good and tasty product, Teff flour with such a falling number needs to be used is unexpected. This is because, for baking bread of wheat flour, the optimal falling number for wheat is between 200 and 250. Conversely, wheat flour with a falling number lower than 120 or higher than 300 is not suitable for processing into (yeast-leavened) a baked product. For instance, with wheat with such high falling numbers, an enzyme preparation (for instance malt flour) is added to the flour to obtain an acceptable product. In contrast with this, Teff flour according to the invention preferably has a falling number which is generally higher than the optimal range of falling numbers of wheat.

The falling number (also called "Hagberg falling number", abbreviated to HFN) of a grain or ground grain is usually determined according to the Hagberg method. This method gives a measure for the activity of the enzyme alpha-amylase. Alpha-amylase degrades starch to sugars (maltose and glucose). The falling number obtained relates to the amount of undigested sugars in the starch. The higher the falling number, the lower the alpha-amylase activity and the fewer digested sugars are present in the grain. In the Hagberg analysis method, usually, exactly 7 grams of starch with a moisture content of 14% are brought into a tube with 25 ml of water. After vigorous shaking, an agitator is brought into the tube and the whole is placed in a boiling water bath. After this, the agitator is moved up and down 55 times, then to be released in the highest position. Due to its own weight, the agitator falls down through the firmed mixture and the duration thereof, measured with the aid of a second counter (for instance a stopwatch), determines the falling number. The falling number can vary from 61 to 600 seconds.

The traditional Teff flour, which is obtained by grinding the grain directly after the harvest, still causes problems with the processing thereof in baked products, as elaborated upon in the introduction. The invention now demonstrates that the reason for this is that, directly after harvesting, Teff grain of known Teff varieties has too low a falling number (that is, lower than 250) to be processed into an attractive product.

It is generally known that grain goes through an after-ripening process after harvesting, in which the falling number of the grain increases. Preferably, a flour according to the invention is obtained by storing the harvested grain kernel and/or having it after-ripen for some time and only grinding the grain after the falling number has reached a value of at least 250. The invention provides a flour of a grain, with the grain belonging to the genus *Eragrostis,* preferably grain of *Eragrostis tef,* characterized in that the falling number of the grain at the moment of grinding is at least 1.01 times higher (usually higher than 250) than at the moment of harvesting the grain, preferably at least 1.05 times higher (usually higher than 300), more preferably at least 1.20 times higher (usually higher than 320), and most preferably at least 1.30 times higher (usually higher than 380). As indicated hereinabove, the falling number of a flour according to the invention has a theoretical maximum of 600. Fig. 1 shows that flour with a falling number between 500 and 600 has very good baking qualities. The invention provides flour of *Eragrostis* spp. grain, with the grain having been ground at least 4, preferably at least 5, and more preferably at least 8 weeks after harvesting. Such a period is usually sufficient to obtain grain which has after-ripened sufficiently and has a falling number which meets the above-mentioned conditions. Particularly with larger amounts, in practice, the grain will virtually always be stored for some time before it is processed (ground). Teff can be stored in standard manners used for the storage of grains, for instance in (temperature-controlled) silos or towers or in a different suitable storage room such as a shed or barn. However, flour with a falling number according to the invention does not always need to be obtained by means of after-ripening. For instance, a Teff variety (or mixtures thereof) can be selected or generated whose grain already has a falling number of at least 250 at the moment of harvesting.

For making a gluten-free product, of course, during the process of harvesting, drying, transport, storage, grinding, mixing and packaging, adequate precautions need to be taken to prevent any mixing of Teff grain with non-gluten-free crop/seeds and/or flour. Thus, preferably, equipment and material (harvesting machines, transport means, storage rooms, millstones) are used which do not come into contact with gluten-containing crops. In order to be able to store grain so as to be free from decay, the grain preferably has a moisture content of at most 12%. It is therefore advisable to after-dry Teff grain before storage, preferably for a few days. The Teff grain is preferably stored in a closed storage room free from vermin. During after-ripening of Teff grain in cold areas, the falling number goes from an average of 230 immediately after harvesting, to 260 after four to five weeks to 330 two or three months after harvesting. In warmer areas, the after-ripening effect is different and, starting with an average falling number of 230 immediately after harvesting, a falling number higher than 420 may eventually be achieved.

The invention further provides the insight that traditional Teff flour does not only have a too low or a too high falling number to be processed into a good baking product, but that, in addition, it is usually not ground fine enough. The finer the flour, the better the flour can be baked. Flour according to the invention is preferably ground so fine that an essential (see below) part of the flour can pass through a sieve with a pore size of at most 150 microns, preferably at most 120 microns, more preferably at most 100 microns. The grinding of Teff grain to a flour according to the invention can be carried out according to standard procedures for the preparation of flour. Preferably, a so-called pin mill with integrated cooling is used, so that the flour does not burn during grinding. For instance, of a flour according to the invention, 0% is blocked by a sieve with a pore size of 250 microns. Maximally 15% remains behind on a sieve with a pore size of 150 microns and maximally 20% when the pore size is only 100 microns (cumulatively approx 30%). So, minimally 70% of the Teff flour according to the invention passes a sieve with a pore size of 100 microns. Such a fine flour has been found to be particularly suitable for processing into a baking product. Without wishing to be bound to any theory, it is conceivable that the good baking qualities of such finely ground Teff flour are related to the fact that, due to the fine grinding, a relatively large surface is available for the absorption of water or a different liquid used for the preparation of a dough.

An additional advantage of flour according to the invention resides in the fact that, compared to other starch sources, *Eragrostis tef* is rich in minerals, such as calcium, zinc, magnesium, iron, phosphor and potassium. Flour according to the invention preferably contains at least 0.14%, preferably at least 0.15% calcium. Calcium is the most common mineral in our body. It is indispensable to the skeleton: bone contains 99% of the calcium in the body in the form of calcium phosphate and crystals which ensure the strength of the skeleton and the hardness of the teeth. Calcium also plays a role in numerous metabolic functions in the body.

A flour according to the invention contains at least 0.003% iron, preferably at least 0.004% iron, more preferably at least 0.005% iron. Iron is one of the most important elements in our body, particularly because it is a building block of hemoglobin and myoglobin. Hemoglobin is the red pigment of blood; myoglobin is mainly found in muscles. Hemoglobin is the substance in the blood which binds oxygen and transports it from the lungs to the cells. Further, iron is a component of various enzymes needed for a variety of metabolic processes in our body.

The consumption of food with a high iron content does not automatically result in an increase of iron in the body. This is because the intake of iron from food is a complex process and strongly depends on the form in which the iron is present in the food. Vegetable iron (Fe²⁺) is usually taken in more poorly than animal iron (Fe³⁺). In addition, the intake of iron is negatively affected by various other substances in our food. These are mainly mineral/metal-binding substances, such as tannins (*inter alia* in tea and walnuts), phytates (in grains), oxalates (*inter alia* in rhubarb), phosphates, caffeine (in coffee), polyphenols (in fruit), soy proteins, egg albumin and casein (in milk) which reduce the intake of iron from food. Flour according to the invention surprisingly contains relatively few if any of such mineral-binding substances. Hence, the invention provides flour which is suitable for preparing food, with the flour containing at most 0.8%, preferably at most 0.3%, more preferably at most 0.2% of a mineral-binding substance. Thus, compared to flours of frequently used other grains, a flour according to the invention contains only little (0.1 to 0.75%) phytic acid (myo-inositol hexa-kis-phosphate). Studies by Gies et al (S. Gies et al, *Comparison of screening methods for anaemia in pregnant women in Awassa, Ethiopia,* Tropical Medicine & International Health, 8 (4), 2003) have shown that anemia hardly occurs in those populations where Teff is an important part of the diet (S. Ketema, Tef *(Eragrostis tef): Breeding, genetic resources, agronomy, utilization and role in Ethiopian agriculture,* IAR, Addis Abeba, Ethiopia, 1993). The study found that the hemoglobin content of the blood of Ethiopian people who eat Teff was higher than that of non-Teff eaters. This is in all probability due to the high content of available iron in Teff.

In a preferred embodiment of the invention, at least two batches of different lots of Teff with different falling numbers are mixed and ground to obtain a flour with falling number in the optimal range, for instance with a falling number of at least 380-390 for preparing a backed product in accordance with the 'market standard'. The grain is preferably mixed such that it comprises different after-ripening stages, while, with material which has after-ripened for a long time, some addition of material which has after-ripened for a short time results in a better baking quality. Flour according to the invention can be obtained by grinding a mixture of grains, such as a mixture comprising Teff grains coming from different *Eragrostis* varieties. A mixture preferably comprises grains with different falling numbers. A grain mixture according to the invention preferably consists for 5-99% of a grain with a falling number higher than 400, more preferably higher than 420, most preferably higher than 450. For the remaining part, such a flour mixture may consist of a grain with a falling number lower than 400, preferably lower than 350. It has been found that flour mixtures comprising flour with a high falling number (approx 450-500) and a relatively low falling number (approx 300-350) have very good baking qualities. Thus, of a Teff mixture according to the invention consisting of approx 20% flour with falling number 450 and approx 80% flour with falling number 320, a bread can be baked which has risen and has been cooked well and has a flexible and elastic structure. The mixing of flours has a favorable effect on the stability of the flour and on the taste of the product (for instance bread) into which the flour mixture has been processed. The invention also provides a flour which has a stable falling number of at least 250, preferably at least 300, more preferably at least 340, most preferably at least 380 for a minimum of 3 weeks.

Further, a flour according to the invention may consist of a mixture of Teff flour according to the invention and flour of a different gluten-free crop or grain, such as potato, rice, corn, arrowroot, buckwheat or quinoa. A mixture can be obtained by grinding a grain mixture or by mixing flours of different, already ground grains or crops. This flour mixture can preferably be used for preparing (gluten-free) products. Further, a flour according to the invention can consist of a mixture of Teff flour according to the invention and mixture of a gluten-containing grain, such as for instance wheat, barley, rye or oat. A mixture according to the invention can consist of flour of two, three, four, five or even more than five different (gluten-free or gluten-containing) grains or crops. The invention further provides the use of a flour or a mixture of flour (baking mix) according to the invention, for instance for preparing a dough or a batter. The invention provides dough or batter and use of dough or batter comprising Teff flour or a flour (mixture) according to the invention, characterized in that the falling number of the Teff grain at the moment of grinding is at least 250, preferably at least 300, more preferably at least 340, most preferably at least 380. Preferably, the falling number of the Teff grain at the moment of grinding is at least 1.01, preferably at least 1.05, more preferably at least 1.20 or even 1.30 times higher than at the moment of harvesting the grain. A very suitable flour (mixture) according to the invention has a falling number between 400 and 550 since this results in a dough or batter with very good baking qualities. Preferably, such a flour (mixture) consists of very finely ground grain kernels (e.g. >50% with a kernel size of maximally 100 microns) since this also has a positive effect on the baking qualities. Batter is a mixture of flour and liquid. Dough is a kneaded mixture of flour and a liquid, such as water, milk, beer or (olive) oil, and optionally other ingredients such as eggs, a leavening agent (such as yeast or baking powder) and a flavoring, such as salt. The mixture can be kneaded both manually and mechanically. A dough according to the invention comprises dough for the preparation of a wide range of (baked) food such as bread, pastry, cookies, pizza, pasta, noodles, etc. The invention also provides risen dough comprising a flour according to the invention. For this purpose, a mixture comprising flour according to the invention, a liquid and a leavening agent is kneaded to a dough according to the invention. Then, the dough is stored for some time under conditions which are favorable to rising, for instance in a draft-free, warm place. It has been found in practice that the amount of liquid which needs to be added to Teff flour in order to eventually obtain a good baking product is larger than normally used with different grains or flours (also see examples hereinbelow). Therefore, the processing of Teff will involve batter rather than dough.

A gluten-free dough according to the invention can be prepared from the Teff flour described hereinabove. A mixture of this Teff flour and flour of one or more other gluten-free crops, such as a mixture of Teff flour and buckwheat flour, rice flour, potato flour, arrowroot flour and/or corn flour is also suitable. The invention thus provides a flour which is gluten-free and which meets the demands on flour products of the modern western consumer. These products are suitable for all consumers and particularly for people with gluten intolerance. Such products contain less than 20 ppm, preferably less than 5 ppm, more preferably at most 1 ppm of gluten.

In addition, the invention provides a method for baking a product comprising the steps of: a) preparing a dough or batter by mixing a flour according to the invention with a liquid (for instance water, milk, beer or oil) and optionally a leavening agent; b) kneading this dough in a desired shape and c) heating the dough for some time.

With the use of a gluten-free flour according to the invention, and if, during preparation, contamination with a gluten-containing product is prevented, the invention further provides a method for baking a gluten-free product.

The invention provides a food product or a luxury food product comprising a flour according to the invention. A food product or luxury food product according to the invention may be both gluten-free and gluten-containing. The Teff flour component in such a flour comprises preferably at least 0.005% iron, at least 0.14% calcium, and at most 0.8% mineral (iron)-binding substances. The eventual concentration of these substances will depend on the amount of Teff flour used relative to the other components used. The food product or luxury food product may have a solid or a liquid form.

A food product according to the invention is, for instance, a baked product prepared according to a method of the invention, such as bread, pastry, cookies, crackers, biscuit, food bars, cornflakes, breadcrumbs, or a drink prepared from flour according to the invention. A food product or luxury food product according to the invention may also be prepared from unground grain belonging to the genus *Eragrostis,* preferably *Eragrostis tef,* characterized in that the falling number of the grain is at least 250, preferably at least 300, more preferably at least 340, most preferably at least 380. Such grain can be obtained by letting the grain after-ripen. An example of such a product is a(n) (alcoholic) drink such as beer prepared from Teff grain with a falling number of at least 250. Depending on the food application of the grain, grain with a particular falling number can be chosen.

Other examples are extruded products or dry dough products comprising dough according to the invention, for instance pastas (for instance macaroni, spaghetti, tagliatelle, lasagna, etc.) and noodles (vermicelli, thin Chinese noodles, chow mein, etc.). Due to the specific character of the Teff starches (it contains a large proportion of starch which is slowly digestible), the flour or a food product according to the invention is excellently suitable for the stimulation of the natural and thus desired flora in particularly the large intestine.

The invention further provides a pre-baked product comprising a flour according to the invention, such as pre-baked bread which can be baked off at home by the consumer. This pre-baked product is usually marketed as a (deep-)frozen product.

An advantage of food comprising a flour according to the invention is that Teff contains relatively high contents of health-promoting nutrients compared to other grains, such as wheat, barley and millet. This is *inter alia* due to the fact that the proportion of germ and brans in Teff grain is relatively large. For grains, carbohydrates form the most prominent component in the food. Sports nutrition consists preferably at least for 60% of carbohydrates in the form of glucose (this is because they are most easily converted into energy). Carbohydrate sources can be categorized on the basis of their Glycemic Index (GI). The GI expresses itself in the elevation of the blood sugar level with a predetermined amount of a particular food product. Food products reach a GI reaction value of between 0 and 100, where white bread with a GI of 70 is used as a reference. Food products with a long absorption time (lower intake rate) are called 'low GI' food products (low GI means a GI lower than 55). Food products with a GI which is higher than 70 are called 'high GI' food products according to this method. For sportspeople, food with a high GI is, on the one hand, attractive, since it quickly results in available glucose. On the other hand, this initial elevation stimulates the secretion of insulin, so that the glucose level also quickly drops again. This problem is particularly known after eating pasta products, a source of carbohydrates which is very popular with sportspeople.

An unexpected advantage of food prepared from Teff flour according to the invention is that, although this food has a high GI, the glucose level remains high. These favorable properties of after-ripened Teff flour according to the invention are possibly the result of the relative proportions of free sugars and undigested sugars (starch) in Teff. It has been found that approx 20% (10-30%) of the carbohydrates in Teff belong to the rapidly degradable type, so that an initially high blood sugar level is obtained. However, about half (35-65%) of the carbohydrates belong to the slowly degradable type, causing a prolonged, constant conversion from starch into glucose. In this manner, the invention hence provides a food (such as pasta or a sports bar) which is very suitable for people, such as (endurance) sportspeople, who have a quick and prolonged need for carbohydrates. Such products are also referred to as "slow release energy" products. Such a food is also excellently suitable for people with overweight problems who want to control their weight by postponing the appetite. The invention also provides a food or luxury food containing Teff flour according to the invention which, *inter alia* thanks to the low content of mineral-binding substances and the 'slow carbohydrates' in Teff, has a positive effect on health. For instance, a food according to the invention has a positive effect on the prevention or treatment of (the symptoms of) anemia, diabetes and obesity. Particularly patients who suffer from diabetes type II have a need for slowly, gradually releasing carbohydrates/glucose.

The remaining amount of carbohydrates in Teff flour (approx 20-40%) are referred to as 'resistant' carbohydrates, because they are not converted into glucose by the digestive system. However, it has been found that these resistant carbohydrates are used as a food by microorganisms present in the intestine (intestinal flora), so that consuming products prepared from Teff flour has a favorable effect on the composition and vitality of the intestinal flora, such as it is, for instance, also obtained by consuming probiotics.

The above-mentioned percentages of the different types of carbohydrates in Teff flour are only indications, and the eventual content in products prepared with Teff flour will depend on the type of flour (which Teff varieties the grain comes from, how long it has after-ripened), whether mixtures of flours (with different Teff flour, with different gluten-free or gluten-containing flour) have been used and how the preparation of the product has taken place (baking time, temperature, additives).

The flour according to the invention, or the starch obtained therefrom, may also be used for different other applications. This is because the invention further provides a coating comprising flour according to the invention and food products which are at least partly provided with such a(n) (edible) coating, such as for instance cheese, French fries or peanuts.

In a further embodiment of the invention, a method is provided for binding a composition of at least two components, comprising the step of mixing these components with starch according to the invention. In relation to food, such thickening agents may, for instance, be used in soups and sauces. However, such a composition may also be used as a binding agent in a pharmaceutical composition such as a tablet, a capsule or a coated tablet. It is known that some medicines with binding agents based on gluten-containing starch cause problems for some celiac disease patients. By using starch of a gluten-free flour according to the invention (Teff flour optionally mixed with a different gluten-free flour), a method is now provided to obtain a composition which is also suitable for persons with a gluten intolerance. Also, such a starch can be used with advantage for binding a cosmetic composition, such as a facial powder.

In summary, it can be stated that the products and methods of the invention make it possible to provide food products with an eating value (taste, smell, texture, structure) acceptable in the western world which can be used as functional food. Particularly important are:
a) the gluten-free aspect, so that celiac disease patients have a whole new range of food products at their disposal;
b) the unique composition of the carbohydrates, so that the food products are excellently suitable as food for diabetes type II patients, endurance sportspeople and as diet food (postponing appetite);
c) the relatively large amount of 'resistant carbohydrates', so that the food products stimulate the intestinal flora;
d) the great amount of iron and the virtual absence of mineral-binding substances, so that anemia is prevented; and
e) the large amount of free minerals, such as Ca, Mg, Mn and K, which help with the rapid recovery of the body after a great physical achievement.

### LEGEND

Fig. 1 shows the relationship between the falling number of Teff flour and the quality of bread prepared with the flour as described in Example 1.

### EXAMPLE 1

The relationship between the falling number of Teff flour and the baking quality was investigated by preparing a series of breads of Teff flour with different falling numbers in the range of 150 to 580 and then assessing the properties of the bread.

The standard baking test of Teff bread was carried out as follows, where the Teff flour was ground fine in a pin mill until minimally 70% of the Teff flour passed a sieve with a pore size of 100 microns:

### Recipe:

| **INGREDIENTS** | **WEIGHT PERCENTAGES** | **WEIGHT IN GRAMS** |
|---|---|---|
| | | |
| Teff flour | 100.00 | 500.00 |
| Citric acid | 0.20 | 1.00 |
| Chicken egg white powder | 4.50 | 22.50 |
| Water (30°C) | 110.00 | 550.00 |
| Yeast | 6.00 | 30.00 |

### Method:

- Mix dry components
- Combine water and yeast in basin
- Add dry components to water/yeast mixture
- Make batter in beating machine
- Beat for two minutes in lowest acceleration
- Beat for approx three minutes in high acceleration
- Scoop batter into two cake tins of 450 grams
- Let batter rise to edge of cake tin
- Bake in oven of approx 235°C for approx 20 minutes
- Remove and cool

**Assessment of baking product:** Each dough/bread was assessed for color, batter firmness, rising speed, rising height, oven rise, baking nature, bread height, bread structure, smell and taste. The assessment is a weighed average on a scale of 1 to 10.

### EXAMPLE 2

By way of illustration of the invention, this example show two formulations for the preparation of bread from a flour mixture of Teff flour and other flours.

### White bread

5000 g of Teff Bread Mix White, 3500 g of water (approx 30°C), 275 g of yeast, 275 g of margarine, 275 g of olive oil. Ingredients of Teff Bread Mix White: Teff flour (41 wt.% with a falling number of 380 or more), corn starch, whole egg powder, tapioca flour, maltodextrin, soy flour, dextrose, salt, leavening agents (E500a, E450 or other stabilizers), citric acid (E330), emulsifiers and thickening agents (E412, E440, E466, E482).

### Brown bread

5000 g of Teff Bread Mix Brown + seeds, 3250 g of water (approx 30°C), 300 g of yeast, 300 g of margarine, 250 g of olive oil. Ingredients of Teff Bread Mix Brown + seeds: Teff flour (36%), corn starch, sunflower seeds, whole egg powder, linseed, sesame seed, tapioca flour, maltodextrin, soy flour, dextrose, salt, leavening agents (E500a, E450), citric acid (E330), emulsifiers and thickening agents (E412, E440, E466, E482).

**Method:** A batter was prepared in a planetary mixer with butterfly. The yeast was dissolved in water. All ingredients were slowly mixed for approx 2 minutes and intensively mixed for approx 7 minutes (highest acceleration). The batter was dosed in a tin and, after approx 35 minutes of after-rising, baked for approx 30 minutes at a temperature of approx 230°C. Rising time, oven temperature and baking time are indicative.

### Example 3

### TEFF GLUTEN-FREE 'SPRITS' (DUTCH SHORTCAKE COOKIE) PIECES

### Recipe:

| **INGREDIENTS** | **PERCENTAGES %** | **WEIGHT IN GRAMS** |
|---|---|---|
| | | |
| Teff flour (Teff Flour White) | 100.00 | 1000.00 |
| Margarine | 95.00 | 950.00 |
| Soft brown sugar | 42.00 | 420.00 |
| Grated lemon | 5.00 | 50.00 |
| Egg | 30.00 | 300.00 |
| Xanthan gum (E415) | 0.50 | 5.00 |

### Method:

- Make a ground piping dough
- Stir butter until creamy
- Add soft brown sugar, grated lemon and egg and beat until smooth
- Mix Teff flour with xanthan gum and add in parts
- Pipe directly onto lightly greased plate, approx 4 cm wide
- Bake at approx 180°C
- Baking time approx 25-30 minutes
- Cut at approx 9 cm
- Remove
- Result approx 60 pieces, baked weight approx 30 grams per piece

The given oven temperature and baking time are indicative.

### Example 4

### TEFF BREAD ORIGINAL

### Recipe:

| **INGREDIENTS** | **PERCENTAGES %** | **WEIGHT IN GRAMS** |
|---|---|---|
| | | |
| Teff flour (Teff Flour White or Dark) | 100.00 | 2000 |
| Milk powder | 4.00 | 80 |
| Baking powder (karam Dethmers) | 2.00 | 40 |
| Salt | 1.50 | 30 |
| Sugar | 2.00 | 40 |
| Xanthan gum (E415) | 0.50 | 10 |
| CMC | 1.00 | 20 |
| Lecithin | 1.00 | 20 |
| Citric acid | 0.30 | 6 |
| Eggs | 70.00 | 1400 |
| Water (approx 30°C) | 50.00 | 1000 |
| Yeast | 6.00 | 120 |
| Margarine | 7.00 | 140 |

### Method:

- Make a batter
- Mix dry components
- Combine water, eggs and yeast in basin
- Add dry components thereto
- Add margarine
- Beat for two minutes in lowest acceleration
- Beat for approx seven minutes in high acceleration
- Scoop or pour batter into tins
- Rising time approx 30 minutes (to just below the edge)
- Bake in oven of approx 235°C
- Baking time approx 25 minutes
- Remove and cool

The given rising time, oven temperature and baking time are indicative.

### Example 5

### TEFF GLUTEN-FREE CAKE, FILLED

### Recipe:

| **INGREDIENTS** | **PERCENTAGES %** | **WEIGHT IN GRAMS** |
|---|---|---|
| | | |
| Teff Flour (Teff Flour White) | 100.00 | 1000 |
| Margarine | 100.00 | 1000 |
| Granulated sugar | 100.00 | 1000 |
| Eggs | 100.00 | 1000 |
| Karam (baking powder Dethmers) | 2.50 | 25 |
| Grated lemon | 8.00 | 80 |
| Raisins (washed) | 80.00 | 800 |

### Method:

- Method cold batter
- Beat margarine, sugar and grated lemon until light and fluffy
- Mix sieved baking powder through Teff flour
- Gradually admix eggs
- Spatulate raisins
- Fill cake tins approx 380 grams
- Bake at approx 160°C
- Baking time approx one hour
- Remove and cool

The given baking temperature and baking time are indicative.

### Example 6

### TEFF GLUTEN-FREE CAKE

### Recipe:

| **INGREDIENTS** | **PERCENTAGES %** | **WEIGHT IN GRAMS** |
|---|---|---|
| | | |
| Teff Flour (Teff Flour White) | 100.00 | 1000 |
| Margarine | 100.00 | 1000 |
| Granulated sugar | 100.00 | 1000 |
| Eggs | 100.00 | 1000 |
| Karam (baking powder Dethmers) | 2.40 | 24 |
| Grated lemon | 8.00 | 80 |

### Method:

- Method cold batter
- Beat margarine, sugar and grated lemon until light and fluffy
- Mix sieved baking powder through Teff flour
- Gradually admix eggs
- Spatulate Teff mixture
- Fill cake tins approx 380 grams
- Bake at approx 160°C
- Baking time approx one hour
- Remove and cool

The given baking temperature and baking time are indicative.

### Example 6

### TEFF GLUTEN-FREE SPONGE CAKES

### Recipe:

| **INGREDIENTS** | **PERCENTAGES** | **WEIGHT** |
|---|---|---|
| | | |
| Teff Flour (Teff Flour White) | 50.00 | 250.00 |
| Corn starch | 50.00 | 250.00 |
| Granulated sugar | 100.00 | 500.00 |
| Eggs | 80.00 | 400.00 |
| Egg yolk | 20.00 | 100.00 |
| Grated lemon | 4.00 | 20.00 |
| Vulkaan (baking powder) | 1.10 | 6.00 |

### Method:

- Method warm batter
- Stir sugar, eggs and grated lemon lukewarm and then whip until light and fluffy
- Mix sieved baking powder, Teff Flour and corn starch well
- Spatulate Teff mixture
- Pipe (nozzle 2) onto greased and floured plates
- Flour sponge cakes with powdered sugar
- Bake at approx 240°C on bottom plate!
- Baking time approx 5 minutes
- Remove and cool

The given oven temperature and baking time are indicative.

### Example 7

### TEFF GLUTEN-FREE 'KANO'S' (DUTCH ALMOND FINGERS) AND 'RONDO'S' (DUTCH ALMOND TARTLETS)

### Recipe:

| INGREDIENTS | PERCENTAGES % | WEIGHT IN GRAMS |
|---|---|---|
| | | |
| Teff Flour White or Dark | 100.00 | 1000.00 |
| Margarine | 80.00 | 800.00 |
| Soft brown sugar | 65.00 | 650.00 |
| Grated lemon | 3.00 | 30.00 |
| Egg | 40.00 | 400.00 |
| Karam (Dethmers) | 0.60 | 6.00 |
| Vulkaan (Dethmers) | 0.40 | 4.00 |
| Xanthan gum (E415) | 0.50 | 5.00 |

### Method:

- Make a pastry
- Mix butter, soft brown sugar, grated lemon well
- Add egg
- Mix baking powders and xanthan gum with Teff Flour and add
- Mix the whole to a cohesive dough
- Cool well and process
- Dough is less suitable for mechanical processing
- Process into almond tartlet or almond finger
- Thickness of slices approx 5 mm
- Oven temperature approx 210°C
- Baking time approx 25-30 minutes

The given oven temperature and baking time are indicative.

### Example 8

### TEFF PANCAKES

### Basic recipe:

| INGREDIENTS | PERCENTAGES % | WEIGHT IN GRAMS |
|---|---|---|
| | | |
| **Teff Flour** | 100.00 | 500.00 |
| Vanilla sugar | 3.00 | 15.00 |
| Salt | 1.00 | 5.00 |
| Baking powder (karam Dethmers) | 1.00 | 5.00 |
| Xanthan gum (E415) | 0.50 | 2.50 |
| Milk | 300.00 | 1500.00 |
| Egg | 20.00 | 100.00 |
| **Citric acid** | 0.20 | 1.00 |

### Method:

- Make a batter
- Mix dry components
- Milk and egg in a basin
- Add dry components
- Make lump-free batter
- Bake in desired shape
- Many variations possible!

### Example 9

### TEFF GLUTEN-FREE 'PORTUGEESJES' (DUTCH FRANGIPANE CAKES)

### Recipe:

| INGREDIENTS | PERCENTAGES % | WEIGHT IN GRAMS |
|---|---|---|
| | | |
| Teff Flour (Teff Flour White) | 100.00 | 1000.00 |
| Margarine | 90.00 | 900.00 |
| Soft brown sugar | 90.00 | 900.00 |
| Grated lemon | 4.00 | 40.00 |
| Xanthan gum (E415) | 1.00 | 10.00 |
| Egg | 67.00 | 670.00 |
| Egg yolk | 33.00 | 330.00 |

### Method:

- Make a warm cake batter
- Whip eggs, egg yolk, soft brown sugar and grated lemon until light and fluffy
- Slowly mix the melted margarine through egg mass
- Mix xanthan gum through Teff Flour and spatulate well through mass
- Scrape down and spatulate again
- Pipe with a piping bag into lightly greased tins to just below the edge
- Bake in a oven of approx 220° C
- Baking time approx 10 to 12 minutes
- Remove and cool

The given oven temperature and baking time are indicative!

### Example 10

### TEFF BREAD, FILLED

### Recipe:

| INGREDIENTS | PERCENTAGES % | WEIGHT IN GRAMS |
|---|---|---|
| | | |
| Teff Flour (White or Dark) | 100.00 | 2000 |
| Milk powder | 4.00 | 80 |
| Baking powder (karam Dethmers) | 2.00 | 40 |
| Salt | 1.50 | 30 |
| Sugar | 2.00 | 40 |
| Xanthan gum (E415) | 0.50 | 10 |
| CMC | 1.00 | 20 |
| Lecithin | 1.00 | 20 |
| Citric acid | 0.30 | 6 |
| Eggs | 70.00 | 1400 |
| Water (approx 30 °C) | 50.00 | 1000 |
| Yeast | 7.50 | 150 |
| Margarine | 7.00 | 140 |
| Raisins | 15.00 | 300 |
| Currants | 15.00 | 300 |
| **Browned pieces of hazelnut** | 10.00 | 200 |

### Method:

- Make a batter
- Mix dry components
- Combine water, eggs, and yeast in basin
- Add dry components
- Add margarine
- Beat for two minutes in lowest acceleration
- Beat for approx seven minutes in high acceleration
- Slowly admix raisins, currents and browned pieces of hazelnut
- Scoop or pour batter into tins
- Rising time approx 30 minutes (to just below the edge)
- Bake in oven of approx 235° C
- Baking time approx 25-30 minutes
- Remove and cool

The given rising time, oven temperature and baking time are indicative.

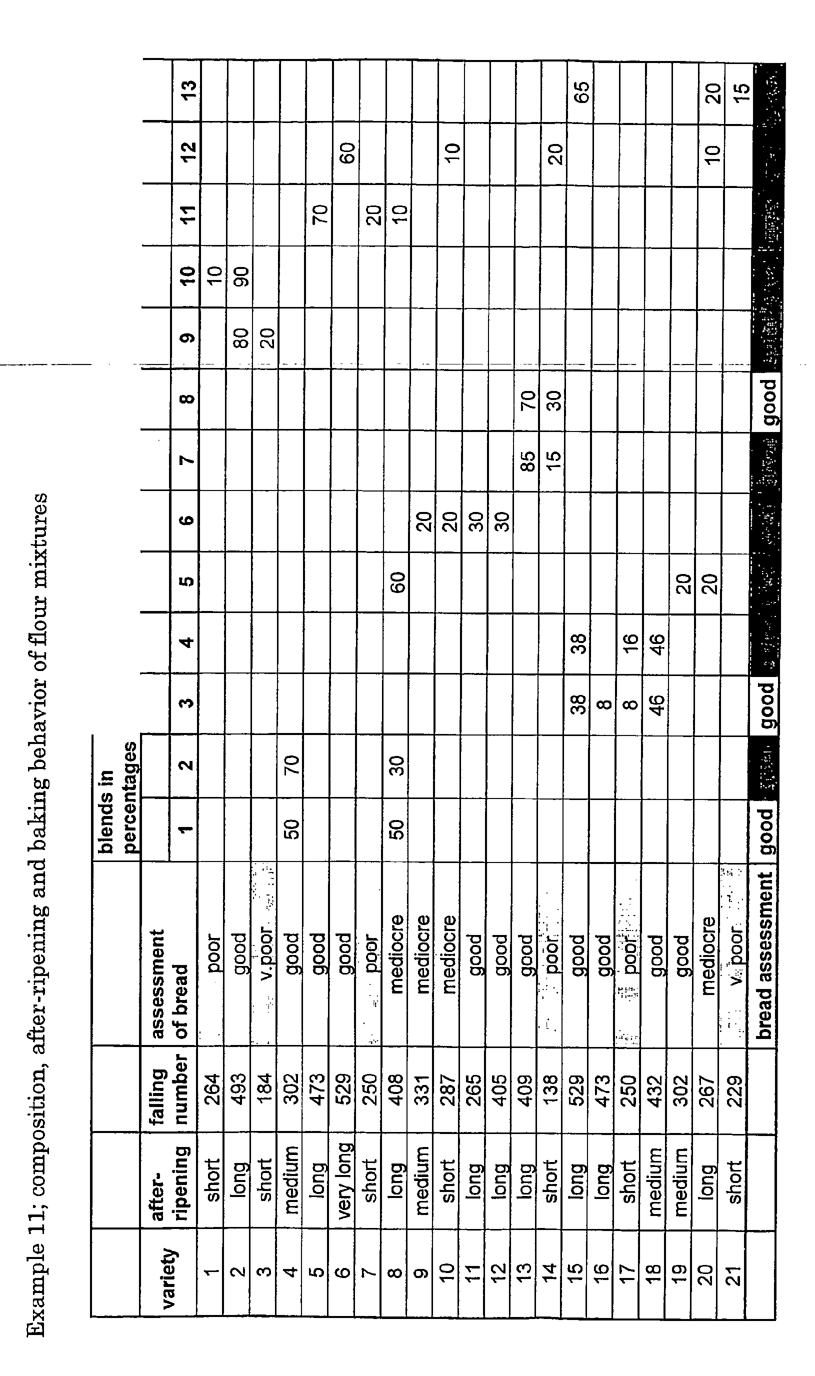

## Claims

1. A flour of a grain belonging to the genus *Eragrostis,* preferably *Eragrostis tef,* **characterized in that** the falling number of the grain at the moment of grinding is at least 250, preferably at least 300, more preferably at least 340, most preferably at least 380.

2. A flour according to claim 1, **characterized in that** the grain has after-ripened.

3. A flour according to claim 2, **characterized in that** the falling number of the grain at the moment of grinding is at least 1.01 times higher than at the moment of harvesting the grain, preferably at least 1.05, more preferably at least 1.20 and still more preferably at least 1.30 times higher.

4. A flour according to any one of the preceding claims, **characterized in that** the grain is gluten-free.

5. A flour according to any one of the preceding claims, wherein the grains has been ground at least 4, preferably at least 6, more preferably at least 8 weeks after harvesting.

6. A flour according to any one of the preceding claims, wherein the falling number of the grain at the moment of grinding is substantially stable for at least 2-3 weeks.

7. A flour according to any one of the preceding claims, wherein the grain is so finely ground that an essential part of the flour can pass through a sieve with a pore size of at most 150 microns, preferably at most 120 microns, more preferably at most 100 microns.

8. A flour according to any one of the preceding claims, wherein the grain contains at least 0.005% iron, and/or at least 0.14 % calcium, and/or at most 0.8% mineral-binding substance.

9. A flour according to any one of the preceding claims, wherein the flour comprises 10-30% rapidly degradable carbohydrates, 35-65% slowly degradable carbohydrates and 20-40% resistant carbohydrates, said percentages calculated relative to the total content of carbohydrates.

10. A flour according to any one of claims 1-9, wherein the grain comprises a mixture of grains.

11. A flour according to claim 10, wherein the mixture consists for 5-99% of flour of a grain with a falling number higher than 400, preferably higher than 420, more preferably higher than 450.

12. A flour according to claim 11, wherein, for the remaining part, the mixture consists of flour of a grain with a falling number lower than 400, preferably lower than 350.

13. A flour according to claim 10, wherein the mixture consists for 5-99% of grain which has after-ripened for a long time, preferably more than 4 weeks, more preferably more than 8 weeks, and, for the remaining part, consists of grain which has after-ripened for a short time, preferably fewer than 4 weeks, more preferably fewer than 2 weeks.

14. A flour comprising a flour according to any one of claims 1-13 mixed with flour of a gluten-free crop, preferably selected from the group comprising potato, corn, rice, arrowroot, buckwheat and quinoa.

15. A flour comprising a flour according to any one of claims 1-14 mixed with flour of a gluten-containing crop, preferably selected from the group comprising wheat, barley, rye and oat.

16. A dough or batter comprising flour according to any one of claims 1-15.

17. A gluten-free dough or batter comprising flour according to any one of claims 1-14.

18. A food product comprising flour according to any one of claims 1-15.

19. A method for baking a product comprising the steps of: a) preparing a dough or batter by mixing a flour according to any one of claims 1-15 with a liquid and, optionally, a leavening agent; b) kneading said dough in a desired shape; and c) heating the dough for some time.

20. A method for baking a gluten-free product, comprising: a) preparing a dough or batter by mixing a flour according to any one of claims 1-14 with a liquid and, optionally, a leavening agent; b) kneading said dough in a desired shape; and c) heating the dough for some time.

21. A baked product prepared according to the method of claim 19 or 20.

22. A gluten-free baked product according to the method of claim 20.

23. A baked product according to claim 21 or 22, wherein the product contains at least 0.005% iron, at least 0.14% calcium and at most 0.8% mineral-binding substance.

24. An extruded product comprising dough according to claim 16 or 17.

25. A coating comprising flour according to according to any one of claims 1-15.

26. A food product at least partly provided with a coating according to claim 25.

27. A food product or luxury food product prepared from unground grain belonging to the genus *Eragrostis,* preferably *Eragrostis tef,* **characterized in that** the falling number of the grain at the moment of the preparation is at least 250, preferably at least 300, more preferably at least 340, most preferably at least 380.

28. A method for binding a composition, preferably a pharmaceutical or a cosmetic composition, of at least two components, comprising the mixing of said components with starch of a flour according to any one of claims 1-15.

29. Use of a flour according to any one of claims 1-15 or a dough or batter according to claim 16 or 17.

## Patentansprüche

1. Mehl eines Korns, das zur Gattung *Eragrostis* gehört, vorzugsweise *Eragrostis tef,* **dadurch gekennzeichnet, dass** die Fallzahl des Korns zum Zeitpunkt des Mahlens wenigstens 250, vorzugsweise wenigstens 300, besonders bevorzugt wenigstens 340 und am meisten bevorzugt wenigstens 380 beträgt.

2. Mehl gemäß Anspruch 1, **dadurch gekennzeichnet, dass** das Korn nachgereift ist.

3. Mehl gemäß Anspruch 2, **dadurch gekennzeichnet, dass** die Fallzahl des Korns zum Zeitpunkt des Mahlens wenigstens 1,01-mal so groß ist wie zum Zeitpunkt des Erntens des Korns, vorzugsweise wenigstens 1,05-mal, besonders bevorzugt wenigstens 1,20-mal und ganz besonders bevorzugt wenigstens 1,30-mal so groß.

4. Mehl gemäß einem der vorstehenden Ansprüche, **dadurch gekennzeichnet, dass** das Korn glutenfrei ist.

5. Mehl gemäß einem der vorstehenden Ansprüche, wobei die Körner wenigstens 4, vorzugsweise wenigstens 6 und besonders bevorzugt wenigstens 8 Wochen nach dem Ernten gemahlen wurden.

6. Mehl gemäß einem der vorstehenden Ansprüche, wobei die Fallzahl des Korns zum Zeitpunkt des Mahlens wenigstens 2-3 Wochen lang im Wesentlichen stabil ist.

7. Mehl gemäß einem der vorstehenden Ansprüche, wobei das Korn so fein gemahlen ist, dass ein wesentlicher Anteil des Mehls durch ein Sieb mit einer Porengröße von höchstens 150 µm, vorzugsweise höchstens 120 µm und besonders bevorzugt höchstens 100 µm treten kann.

8. Mehl gemäß einem der vorstehenden Ansprüche, wobei das Korn wenigstens 0,005% Eisen und/oder wenigstens 0,14% Calcium und/oder höchstens 0,8% mineralbindende Substanz enthält.

9. Mehl gemäß einem der vorstehenden Ansprüche, wobei das Mehl 10-30% schnell abbaubare Kohlenhydrate, 35-65% langsam abbaubare Kohlenhydrate und 20-40% resistente Kohlenhydrate umfasst, wobei die Prozentwerte relativ zum Gesamtgehalt an Kohlenhydraten berechnet sind.

10. Mehl gemäß einem der Ansprüche 1-9, wobei das Korn ein Gemisch von Kornsorten umfasst.

11. Mehl gemäß Anspruch 10, wobei das Gemisch zu 5-99% aus einem Mehl eines Korns mit einer Fallzahl von über 400, vorzugsweise über 420 und besonders bevorzugt über 450 besteht.

12. Mehl gemäß Anspruch 11, wobei der Rest des Gemischs aus Mehl eines Korns mit einer Fallzahl von weniger als 400, vorzugsweise weniger als 350, besteht.

13. Mehl gemäß Anspruch 10, wobei das Gemisch zu 5-99% aus Korn besteht, das während einer langen Zeit, vorzugsweise mehr als 4 Wochen, besonders bevorzugt mehr als 8 Wochen nachgereift ist, und der Rest aus Korn besteht, das nur kurze Zeit, vorzugsweise kürzer als 4 Wochen, besonders bevorzugt kürzer als 2 Wochen, nachgereift ist.

14. Mehl, das ein Mehl gemäß einem der Ansprüche 1-13 umfasst, das mit Mehl einer glutenfreien Feldfrucht gemischt ist, die vorzugsweise aus der Gruppe ausgewählt ist, die aus Kartoffel, Mais, Reis, Pfeilwurz, Buchweizen und Quinoa besteht.

15. Mehl, das ein Mehl gemäß einem der Ansprüche 1-14 umfasst, das mit Mehl einer glutenhaltigen Feldfrucht gemischt ist, die vorzugsweise aus der Gruppe ausgewählt ist, die aus Weizen, Gerste, Roggen und Hafer besteht.

16. Teig oder Rührteig, der Mehl gemäß einem der Ansprüche 1-15 umfasst.

17. Glutenfreier Teig oder Rührteig, der Mehl gemäß einem der Ansprüche 1-14 umfasst.

18. Nahrungsmittel, das Mehl gemäß einem der Ansprüche 1-15 umfasst.

19. Verfahren zum Backen eines Produkts, das die folgenden Schritte umfasst: a) Herstellen eines Teigs oder Rührteigs durch Mischen eines Mehls gemäß einem der Ansprüche 1-15 mit einer Flüssigkeit und gegebenenfalls einem Treibmittel; b) Kneten des Teigs in einer gewünschten Form; und c) Erhitzen des Teigs während einer bestimmten Zeit.

20. Verfahren zum Backen eines glutenfreien Produkts, umfassend: a) Herstellen eines Teigs oder Rührteigs durch Mischen eines Mehls gemäß einem der Ansprüche 1-14 mit einer Flüssigkeit und gegebenenfalls einem Treibmittel; b) Kneten des Teigs in einer gewünschten Form; und c) Erhitzen des Teigs während einer bestimmten Zeit.

21. Backware, hergestellt nach dem Verfahren von Anspruch 19 oder 20.

22. Glutenfreie Backware, hergestellt nach dem Verfahren von Anspruch 20.

23. Backware gemäß Anspruch 21 oder 22, wobei das Produkt wenigstens 0,005% Eisen, wenigstens 0,14% Calcium und höchstens 0,8% mineralbindende Substanz enthält.

24. Extrudiertes Produkt, das Teig gemäß Anspruch 16 oder 17 umfasst.

25. Beschichtung, die Mehl gemäß einem der Ansprüche 1-15 umfasst.

26. Nahrungsmittel, das wenigstens zum Teil mit einer Beschichtung gemäß Anspruch 25 versehen ist.

27. Nahrungsmittel oder Luxusnahrungsmittel, das aus ungemahlenem Korn hergestellt ist, das zur Gattung *Eragrostis* gehört, vorzugsweise *Eragrostis tef*, **dadurch gekennzeichnet, dass** die Fallzahl des Korns zum Zeitpunkt der Herstellung wenigstens 250, vorzugsweise wenigstens 300, besonders bevorzugt wenigstens 340 und am meisten bevorzugt wenigstens 380 beträgt.

28. Verfahren zum Binden einer Zusammensetzung, vorzugsweise einer pharmazeutischen oder kosmetischen Zusammensetzung, von wenigstens zwei Komponenten, umfassend das Mischen der Komponenten mit Stärke eines Mehls gemäß einem der Ansprüche 1-15.

29. Verwendung eines Mehls gemäß einem der Ansprüche 1-15 oder eines Teigs oder Rührteigs gemäß Anspruch 16 oder 17.

## Revendications

1. Farine d'un grain appartenant au genre *Eragrostis,* de préférence, *Eragrostis tef*, **caractérisée en ce que** l'indice de chute du grain au moment du broyage est d'au moins 250, de préférence, d'au moins 300, plus préférablement, d'au moins 340, et de manière préférée entre toutes, d'au moins 380.

2. Farine selon la revendication 1, **caractérisée en ce que** le grain est au stade d'après-maturation.

3. Farine selon la revendication 2, **caractérisée en ce que** l'indice de chute du grain au moment du broyage est au moins 1,01 fois supérieur à celui au moment de la récolte du grain, de préférence, au moins 1,05, plus préférablement, au moins 1,20 fois et plus préférablement encore, au moins 1,30 fois supérieur.

4. Farine selon l'une quelconque des revendications précédentes, **caractérisée en ce que** le grain est sans gluten.

5. Farine selon l'une quelconque des revendications précédentes, dans laquelle les grains ont été broyés au moins 4, de préférence, au moins 6, plus préférablement, au moins 8 semaines après la récolte.

6. Farine selon l'une quelconque des revendications précédentes, dans laquelle l'indice de chute du grain au moment du broyage est essentiellement stable pendant au moins 2-3 semaines.

7. Farine selon l'une quelconque des revendications précédentes, dans laquelle le grain est si finement broyé qu'une partie essentielle de la farine peut passer à travers un crible ayant une taille de mailles d'au plus 150 microns, de préférence, d'au plus 120 microns, plus préférablement, d'au plus 100 microns.

8. Farine selon l'une quelconque des revendications précédentes, dans laquelle le grain contient au moins 0,005 % de fer, et/ou au moins 0,14 % de calcium, et/ou au plus 0,8 % d'une substance se liant à un minéral.

9. Farine selon l'une quelconque des revendications précédentes, dans laquelle la farine comprend de 10 à 30 % de glucides à dégradation rapide, 35 à 65 % de glucides à dégradation lente et 20 à 40 % de glucides résistants, lesdits pourcentages étant calculés par rapport à la teneur totale en glucides.

10. Farine selon l'une quelconque des revendications 1 à 9, dans laquelle le grain comprend un mélange de grains.

11. Farine selon la revendication 10, dans laquelle le mélange se compose de 5 à 99 % de farine d'un grain ayant un indice de chute supérieur à 400, de préférence, supérieur à 420, plus préférablement, supérieure à 450.

12. Farine selon la revendication 11 dans laquelle, pour le reste, le mélange se compose de farine d'un grain ayant un indice de chute inférieur à 400, de préférence, inférieur à 350.

13. Farine selon la revendication 10, dans laquelle le mélange se compose de 5 à 99 % d'un grain récolté longtemps après maturation, de préférence, plus de 4 semaines, plus préférablement, plus de 8 semaines, et pour le reste, se compose d'un grain récolté peu après maturation, de préférence, moins de 4 semaines, plus préférablement, moins de 2 semaines.

14. Farine comprenant une farine selon l'une quelconque des revendications 1 à 13 mélangée avec une farine d'une culture sans gluten choisie, de préférence, dans le groupe comprenant la pomme de terre, le mais, le riz, l'arrow-root, le sarrasin et le quinoa.

15. Farine comprenant une farine selon l'une quelconque des revendications 1 à 14 mélangée avec une farine d'une culture contenant du gluten choisie, de préférence, dans le groupe comprenant le blé, l'orge, le seigle et l'avoine.

16. Pâte comprenant la farine selon l'une quelconque des revendications 1 à 15.

17. Pâte sans gluten comprenant la farine selon l'une quelconque des revendications 1 à 14.

18. Produit alimentaire comprenant la farine selon l'une quelconque des revendications 1 à 15.

19. Procédé de cuisson d'un produit comprenant les étapes consistant à : a) préparer une pâte en mélangeant une farine selon l'une quelconque des revendications 1 à 15 avec un liquide et, éventuellement, un levain ; b) pétrir ladite pâte pour obtenir une forme souhaitée ; et c) chauffer la pâte pendant un certain temps.

20. Procédé de cuisson d'un produit sans gluten, comprenant les étapes consistant à : a) préparer une pâte en mélangeant une farine selon l'une quelconque des revendications 1 à 14 avec un liquide et, éventuellement, un levain ; b) pétrir ladite pâte pour obtenir une forme souhaitée ; et c) chauffer la pâte pendant un certain temps.

21. Produit cuit préparé selon le procédé de la revendication 19 ou 20.

22. Produit cuit sans gluten selon le procédé de la revendication 20.

23. Produit cuit préparé selon la revendication 21 ou 22, dans lequel le produit contient au moins 0,005 % de fer, au moins 0,14 % de calcium, et au plus 0,8 % d'une substance se liant à un minéral.

24. Produit extrudé comprenant la pâte selon la revendication 16 ou 17.

25. Enrobage comprenant la farine selon l'une quelconque des revendications 1 à 15.

26. Produit alimentaire au moins partiellement pourvu d'un enrobage selon la revendication 25.

27. Produit alimentaire ou produit alimentaire de luxe préparé à partir d'un grain non broyé appartenant au genre *Eragrostis,* de préférence, *Eragrostis tef*, **caractérisé en ce que** l'indice de chute du grain au moment de la préparation est d'au moins 250, de préférence, d'au moins 300, plus préférablement, d'au moins 340, et de manière préférée entre toutes, d'au moins 380.

28. Procédé pour lier une composition, de préférence, une composition pharmaceutique ou cosmétique, d'au moins deux composants, comprenant l'étape consistant à mélanger lesdits composants avec l'amidon d'une farine selon l'une quelconque des revendications 1 à 15.

29. Utilisation d'une farine selon l'une quelconque des revendications 1 à 15 ou d'une pâte selon la revendication 16 ou 17.
